Europäisches Patentamt

European Patent Office

Office européen des brevets

(19)

(11) **EP 1 317 390 B1**

(12) **EUROPEAN PATENT SPECIFICATION**

(45) Date of publication and mention
of the grant of the patent:
**23.11.2005 Bulletin 2005/47**

(51) Int Cl.⁷: **B65G 17/38**

(21) Application number: **00967622.2**

(86) International application number:
**PCT/EP2000/008004**

(22) Date of filing: **16.08.2000**

(87) International publication number:
**WO 2002/014190 (21.02.2002 Gazette 2002/08)**

(54) **MULTI-DIRECTIONAL CHAIN LINK ASSEMBLY FOR MULTILEVEL OVERLAPPING SLAT CONVEYORS**

MULTIDIREKTIONALER KETTENGLIEDZUSAMMENBAU FÜR ÜBERLAPPENDE MULTILEVEL LATTENFÖRDERER

ENSEMBLE DE CHAINES A MAILLONS MULTIDIRECTIONNELS POUR CONVOYEURS A LATTES A RECOUVREMENT MULTINIVEAUX

(84) Designated Contracting States:
**AT BE CH CY DE DK ES FI FR GB GR IE IT LI LU MC NL PT SE**

(43) Date of publication of application:
**11.06.2003 Bulletin 2003/24**

(73) Proprietor: **SIEMENS AKTIENGESELLSCHAFT 80333 München (DE)**

(72) Inventor: **MILEWICZ, Mark Turramurra, New South Wales 2074 (AU)**

(56) References cited:
**GB-A- 665 885          US-A- 3 589 503**

EP 1 317 390 B1

**Description**

Technical Field

The invention pertains to a drive chain mechanism for overlapping slat conveyors and more particularly for recirculating or closed loop multilevel overlapping slat conveyors having both horizontal and inclined portions, especially with the chain loop situated at the mid-point between two support rollers running on two spaced parallel rails, whereby the chain loop is guided at a central track midway between the parallel rails and whereby the chain loop is the principle joining and driving component of the conveyor itself.

Background

In most existing continuous loop multilevel overlapping slat conveyors, the chain loop as joining and driving component of the conveyor itself is situated at the mid-point between the two support rollers. A slat conveyor as disclosed in EP 0 056 912 is cited for example. Figure 1 shows a typical plan view detail of an inclined 90° section of a 180°curve of such a conveyor. In situations where there is a loop (180deg bend) the existing chain links are designed to move only in two axis, horizontal and vertical.

These existing chain links produce significant "drag" on the spine as it is pulled around the bend. As with the traditional designs the mid-point of the chain links, carrying the spines, divert significantly from the true circular curve and the remains of the offset position until it re-enters the straight section of the slat conveyor. The supporting wheels of the spine are forced to skew, whilst entering or exiting the curve section of the conveyor, the slat and the spine are caused to "crab" around the bend and exert uneven and unbalanced loads onto the guide wheels and the guide channels, themselves. These actions produce excessive wear on the wheels and the track itself, which leads to excessive wear and tear on both wheels and tracks and therefore increases the maintenance frequency on these parts.

US-A-3 589 503 discloses an alternating arrangement of horizontal and vertical wheels forming a type of chain links, however such chain is not useable for conveyors of the kind of the present invention.

Disclosure of invention

One object of the present invention is to provide a multilevel overlapping slat conveyor as described above that will track better with a smooth and constant flow around a 90° and/or a 180° bend.

Another object of the present invention is to provide a multilevel overlapping slat conveyor with a self adjusting take-up mechanism that will effectively tension the chain link without the need for any external "take-up" device(s).

Brief description of the invention

The drive chain mechanism of the invention is mainly defined by claim 1 and has an entire chain loop being constructed from a multi-directional chain link assembly comprising two links, a first (track-) guided link and a second link, joined together to form a single multi-directional chain link assembly, which assembly comprises guide/drive wheels for guiding the assembly at the central track, these guide/drive wheels are only attached to the first link, being the guided link. The design of the multi-directional chain link assembly allows the mid-point of the second link carrying the spine to follow closely the true geometrical path of the centre track. This greatly reduces the drag of the spine around the inclined curved section of the multilevel slat conveyor.

Normally the drive chain mechanism of that multi-directional chain link assembly comprises guide/drive wheels for guiding the assembly at the central track. It is the special idea of the invention to attach the guide/drive wheels only to the first link, being the guided link. The fact that the - normally two - drive wheels are only attached to the first link allows the second link not to be constrained by the drive wheel track. Moreover the first guided link allows the second link to track very close to the true geometrical arc, in the horizontal plane.

According to another feature of the invention the first link and the second link of each multi-directional chain link assembly are joined together for example by means of a connecting pin to form the single multi-directional chain link assembly of the invention.

The true tracking aspect of the multi-directional chain link assembly is achieved by having a ball joint connection from the guided first link of the multi-directional chain link assembly to the second link of the next following chain link assembly.This ball joint provides the mean for tracking in both the 2-dimensional and 3-dimensional curves.

The drive chain mechanism of the invention as described before is further characterized in that the multi-directional chain link assemblies are held together into the loop by the association of a connecting take-up plate in one of the links and a ratchet mechanism located within the other link. The advantage achieved with the invention is that the built-in take-up allows the chain link assembly to be assembled without altering or adjusting the length of frame. Joining the multi-directional chain link assembly into the loop on site will simply be carried out by inserting the connecting take-up plate in the second link into the first link of the following multi-directional chain link assembly.

Preferably the connecting take-up plate is provided at one of its ends with the ball joint of the ball joint connection to connect the take-up plate to the second link and at its other end is provided with a ratchet connection acting with a ratchet mechanism located within the first link.

To ensure that all the ratchet connections are initially assembled at the same position, a disposable stop pin, inserted through the connecting take-up plate, operates as a limiting device. This stop ensures that all multi-directional chain link assembly links are connected together with the same gap between the links. The stop pin is designed to break away from the links once the multi-directional chain link assembly rounds a curve, or manually removed upon completion of the assembly. The built-in take-up allows the adjustment of the multi-directional chain link assembly length without the need of any external take-up mechanism. The take-up, or length of the multi-directional chain link assembly, is adjusted by loosening a lock nut, thus disengaging the take-up ratchet plate and moving the connecting take-up plate to the required position.

The new design of the multi-directional chain link assembly o the invention allows the link, carrying the spine, to move in three dimensions and to significantly minimise the diversion from the true circular curve, especially making good use of the following equation:

$$z = (m^2 - l^2)^{1/2}$$

The equation expresses the relationship between the elements in the design of the multi-directional chain link assembly of the invention.

"l" - being the distance between the guide wheels centres of the first guided link. Wheels centres are equidistant from the two joints in the first link,

"m"- being the distance from the first joint to the second joint in the first link (length of the first link),

"z" - being the distance from the first joint to the second joint in the second link (length of link 2).

However for the practical reasons the radius "r" of the bend should not be less than 0.8 metres and "(m + z)" should be between 0.2 and 0.3 metres.

This design greatly reduces wear on the wheels and the track itself, because the supporting wheels of the spine do not force the spine to skew while entering or exiting the curve section of the conveyor.

Brief description of the accompanying drawings

The invention will now be described by way of example only and with reference to the drawings, wherein:

Figure 1    Shows a sectional plan view of a typical 90° and/or 180° inclined (banked) slat conveyor.

Figure 2    Shows a sectional detail of both links 10 and links 11 of the invention.

Figure 3    Shows the geometrical relationship between the individual elements of the multi-directional chain link and the track of the invention.

Figure 4    Details the points of deviation of the spine from the truck center of a traditional slat conveyor.

Figure 5    Shows an elevation of the deviation of the spine from the truck center of the chain link assembly of the invention

Figure 6    Shows a sectional detail of the multi-directional chain link assembly, detailing the major components of the invention.

Figure 7    Shows an abstract assembled sectional detail of the multi-directional chain link assembly.

Figure 8    Shows in an exploded view the multi-directional chain link assembly of the invention.

Figure 9    Shows the assembled multi-directional chain link assembly of the invention with the main parts of the assembly encircled.

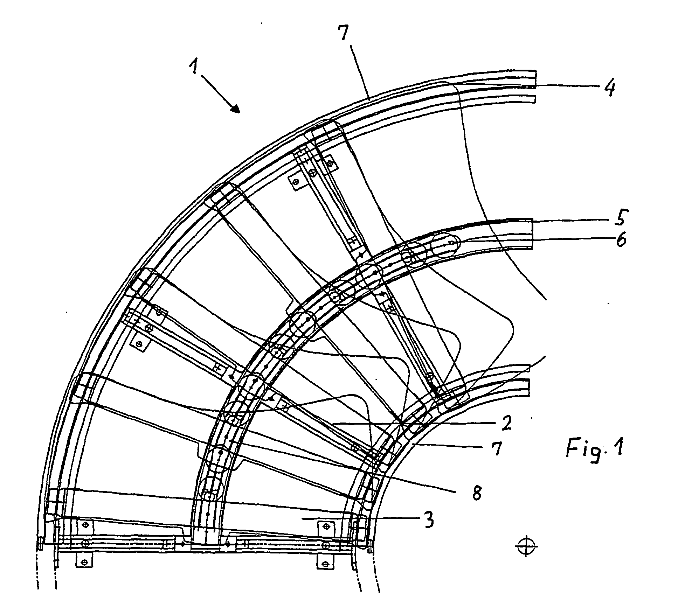

Figure 1 shows a sectional plan view of an existing typical 90° and/or 180° inclined (banked) slat conveyor 1. The conveyor consists of slats 2 each of them mounted on a spine 3 which is carried by the link of a chain loop 6. The chain loop 6 is situated at the mid-point of the spine 3 between the two support rolls 4 running on the two spaced parallel rails 7. The chain loop 6 is guided at a central track 5 midway between the parallel rails 7.

In situations where there is a loop (180deg bend) the existing chain links are designed to move only in two axis, horizontal and vertical. The chain links produce significant "drag" on the spine 3 as it is pulled around a bend causing the slat 2 and the spine 3 to "crab" around the bend. This leads to the excessive wear and tear on both guiding wheels and track 5.

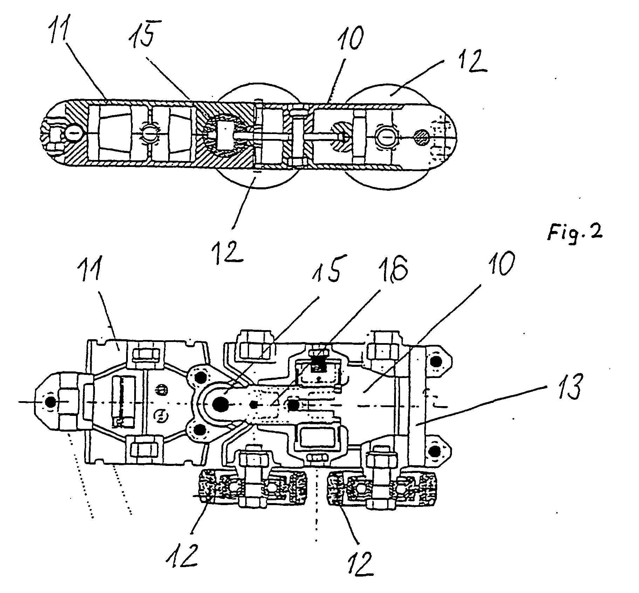

The drive chain mechanism of the invention having an entire chain loop being constructed from a multi-directional chain link assembly comprising two links, a first (track-) guided link and a second link, joined together to form a single multi-directional chain link assembly. Figure 2 shows the major components of the invention. As shown and discribed in detail later each multi-directional chain link assembly comprises the two parts, referred to as link 10 and link 11. Both links 10 and 11 are held together by means of a ball joint connection 15, the ball of it being part of a connecting take-up plate 16 in one of the links 10 or 11. The multi-directional chain link assembly is joined together into the loop by means of the connecting pin 13 to connect one of the links 10 or 11 to the next link of the adjoining link of the loop 13 to form the single multi-directional chain link assembly. It is the special idea of the invention to attach the guide/drive wheels 12 only to the first link 10, being the guided link. The fact that the - normally two - drive wheels are only attached to the first link 10 allows the second link not to be constrained by the drive wheel track. Moreover the first guided link allows the second link to track very close to the true geometrical arc, in the horizontal plane.

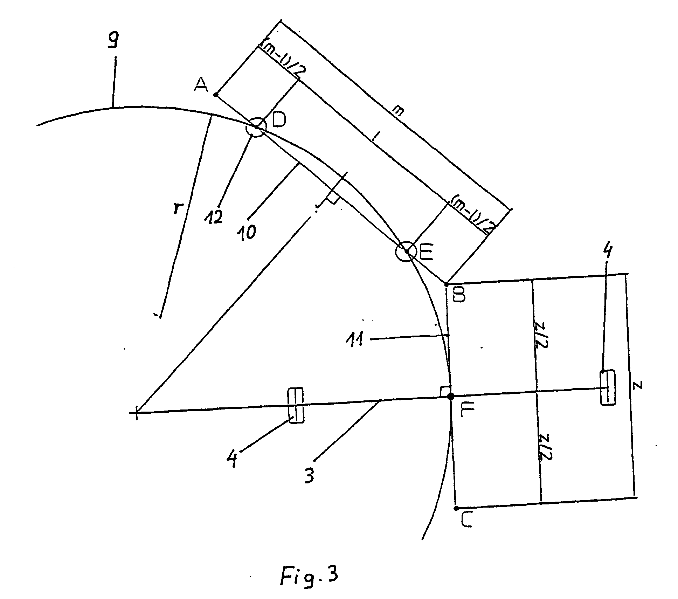

Figure 3 shows schematically the geometrical relationship between the individual elements of the multi-directional chain link and the track of the present invention.

"l" -  being the distance between point D and E (distance between guide wheels centres in the first link 10). The wheels centres are equidistant from the two joints A and B,

"m" -  being the distance from joint A to joint B in first link 10 (length of link 10),

"z" -  being the distance from joint B to joint C in the second link 11 (length of link 11).
Point F is equidistant to the two joints B and C and lies on the intersection of the arc 9 and the line crossing joints B and C.

"r" -  being the radius of the arc 9 on which points D, E and F lie.

The equation:

$$z = (m^2 - l^2)^{1/2}$$

expresses the relationship between these elements in the design, however for practical reasons "r " should not be less than 0.8 metres and "(m + z)" should be between 0.2 and 0.3 metres.

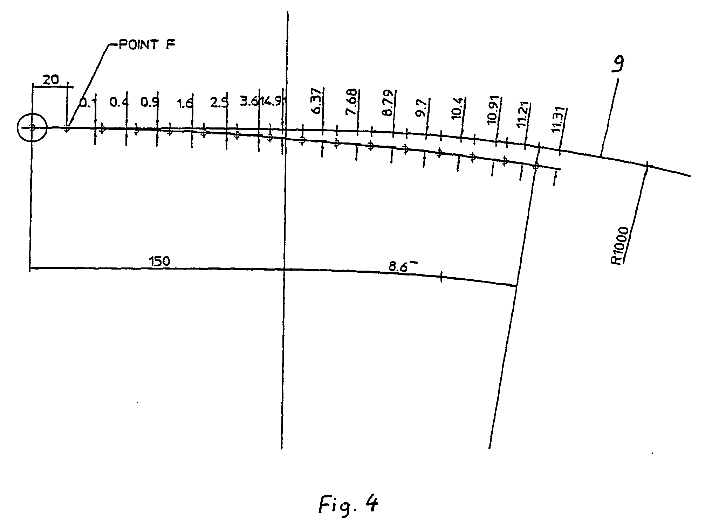

Figure 4 now shows in a geometrical detail the spine 3 attachment path of a typical traditional design. Figure 4 details the points of deviation of the spine 3 from the true track centre of a traditional slat conveyor (based on chain pitch of 300 mm and on arc radius of 1000 mm). As the spine 3 initiates the 1000 mm radius r curve, the centre of the link 11, carrying the spine 3, deviates from the true centre of the guide track 5 (arc 9) by the distances shown. Point F is at the middle of the pitch, snapshots are at every 20 mm. Vertical dimensions show distances of deviation from the true centre of the track 5. As can be seen, the maximum deviation from the centre of the guide track 5, at the final position is 11.31 mm.

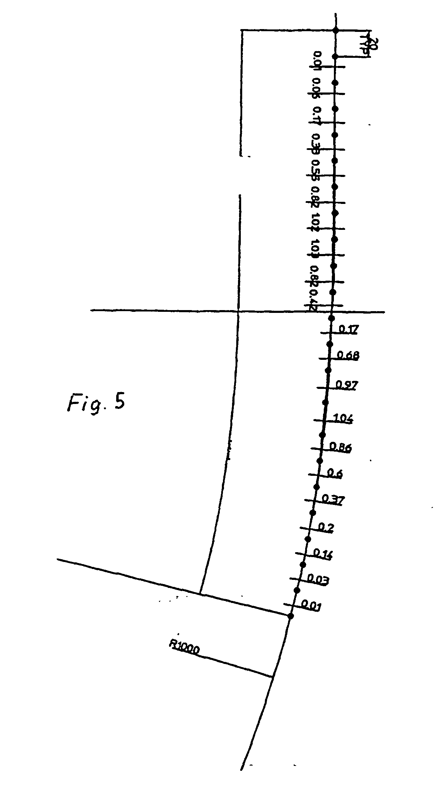

Figure 5 shows in a geometrical detail the spine 3 attachment path of the present invention (based on chain pitch of 300 mm and on arc radius of 1000 mm). It details the points of deviation of the spine 3, from the true track 5 centre, of the multi-directional chain link slat conveyor 1. As the spine 3 initiates the 1000 mm radius curve, the centre of the link 11, carrying the spine 3, deviates from the true centre of the guide track 5 by the distances shown. Point F is at the middle of the pitch, snapshots are at every 20mm. Vertical dimensions show distances of deviation from true track centre.

As can be seen by the measurement, the maximum deviation from the centre of the guide track has been greatly reduced (11.31 mm to 1.04mm) and thus ensuring a smooth transition into the embanked curve of the slat conveyor.

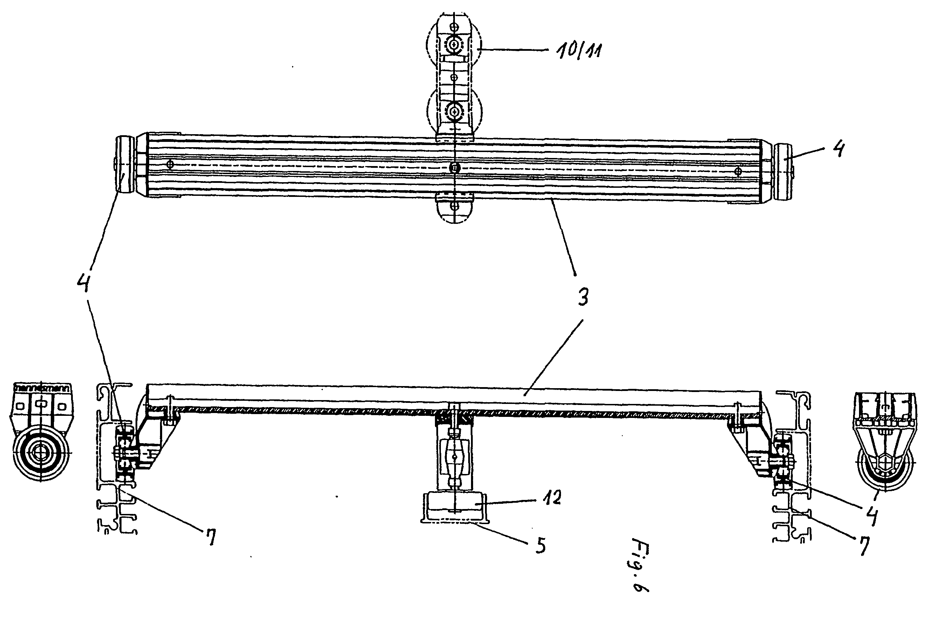

Figure 6 shows a sectional detail of the mufti-directional chain link assembly, detailing the major components of the invention. As shown in this figure the multi-directional chain link assembly is joint to the spine 3 at the mid-point between two support rollers 4 running on the two spaced parallel rails 7 . Furthermore you can see one of the two guide/drive wheels 12 for guiding the assembly at the central track 5 as well as the multi-directional chain links 10/11.

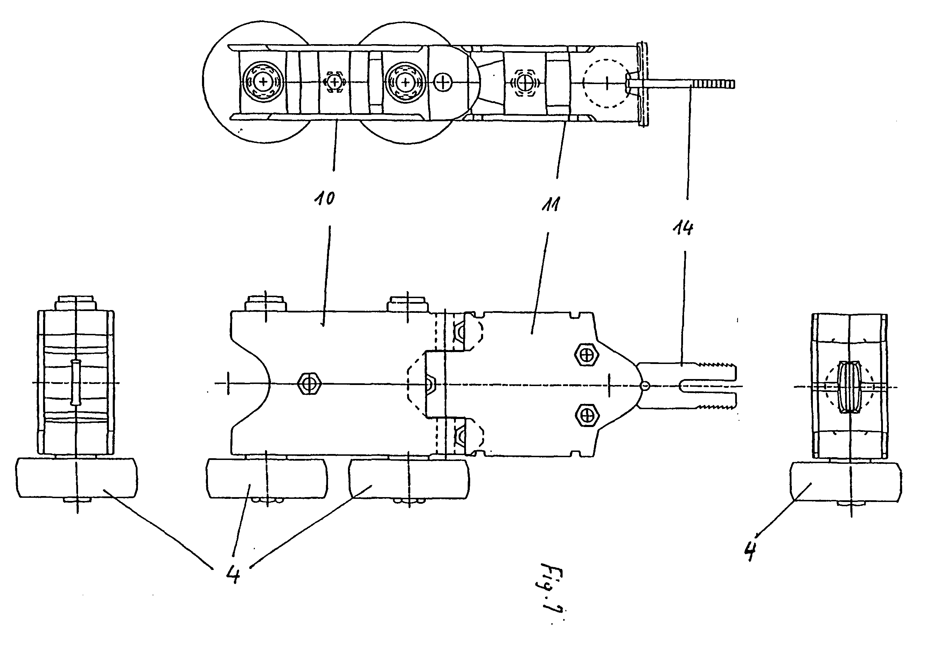

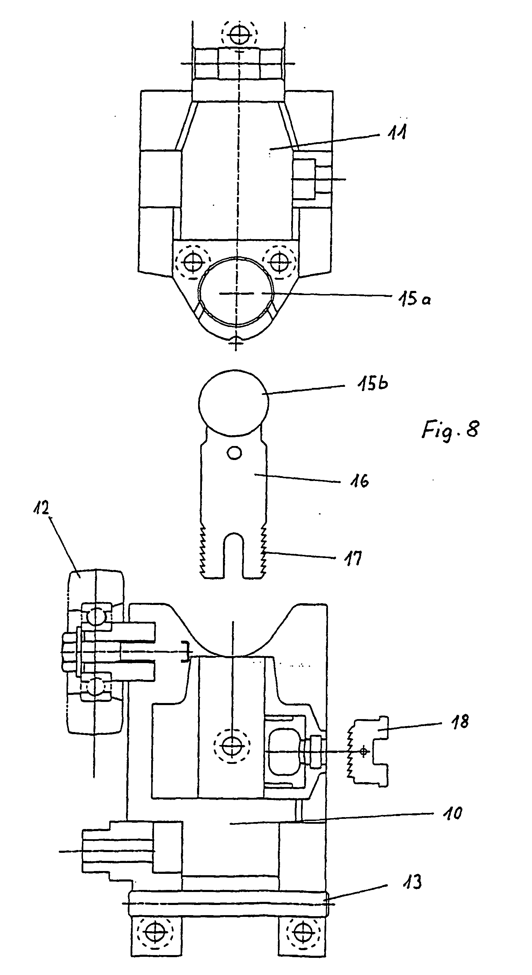

The entire chain loop of the invention is constructed from the multi-directional chain link assembly. As shown in Figure 7 the multi-directional chain link assembly comprises two parts, referred to as link 10 and link 11. The two links 10/11 are joined together by means of a connecting pin 13 (Figure 8) to form the single multi-directional chain link assembly.

Fig.8 shows in an exploded view that the multi-directional chain link assembly is achieved by having a ball joint connection 15a,15b from the guided first link 10 of the multi-directional chain link assembly to the second link 11 of the next following chain link assembly. As shown in the mid of this figure a connecting take-up plate 16 is provided at one end with the ball joint connection 15a,15b to connect the take-up plate 16 to the second link 11 and is provided at its other end with a ratchet connection 17 acting with a ratchet mechanism 18 located within the first link 10. The association of a connecting take-up plate 16 in one of the links 10 or 11 and a ratchet mechanism located within the other link 11 or 10 held together the multi-directional chain link assemblies into the loop. Further it is shown in Figure 8 how the multi-directional chain link assembly is joined together by means of the connecting pin 13.

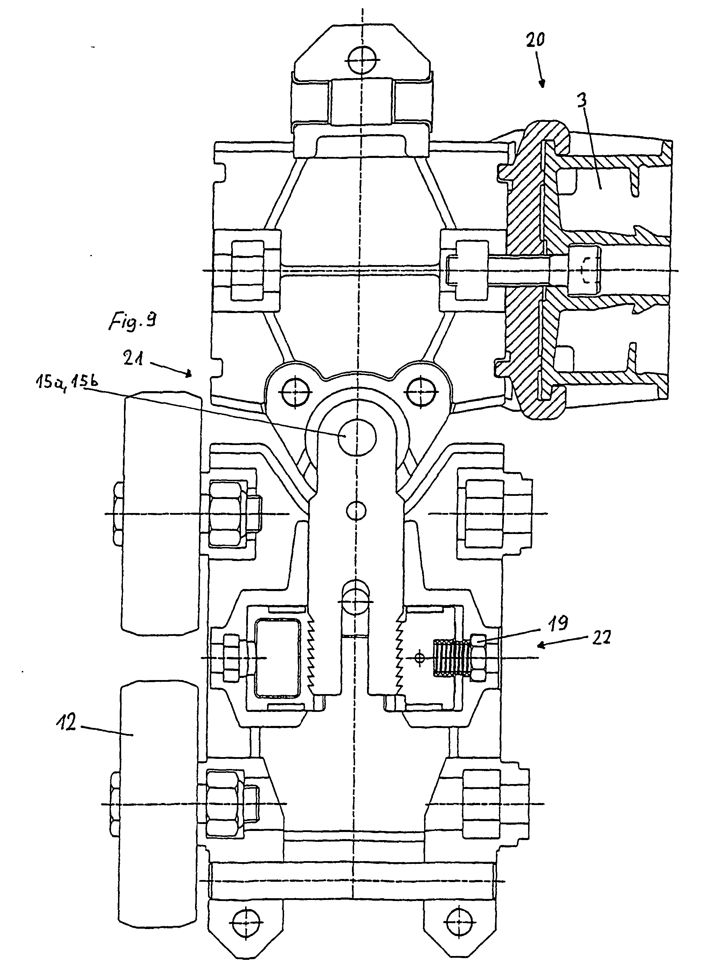

Joining the multi-directional chain link assembly into the loop, on site, will simply be carried out by inserting the connecting take-up plate 16 in link 11, into link 10 of the following multi-directional chain link assembly. This is shown in Figure 9. The multi-directional chain link assembly is held together by the association of the ball joint connection 15a,15b located within link 10. To ensure that the ratchet connections are initially assembled at the same position, a disposable stop pin (not shown), inserted through the connecting take-up plate 16, operates as a limiting device. This stop ensures that all multi-directional chain link assembly links are connected together with the same gap between the links 10 and 11. The stop pin is designed to break away from the links once the multi-directional chain link assembly rounds a curve, or manually removed upon completion of the assembly.

The built-in take-up allows the adjustment of the multi-directional chain link assembly length without the need of any external take-up mechanism. The take-up, or length of the multi-directional chain link assembly, is adjusted by loosening the M8 lock nut 19 (Figure 9), thus disengaging the take-up ratchet plate 16 and moving the connecting take-up plate 16 to the required position, on 3.0 mm increments.

Figure 9 shows the assembled multi-directional chain link assembly of the invention. The main parts of the assembly are encircled. 20 shows the spine 3 mounted on link 11; 21 shows the ball joint connection 15a,15b and 22 shows the ratchet connection 17 acting with a ratchet mechanism 18, secured by the srew nut 19.

## Claims

1. A drive chain mechanism for recirculating or closed loop multilevel overlapping slat conveyors having both horizontal and inclined portions, with the chain loop situated at the mid-point between two support rollers (4) running on two spaced parallel rails (7), whereby the chain loop is guided at a central track (5) midway between the parallel rails (7) and whereby the chain loop is the principle joining and driving component of the conveyor (1) itself, **characterized in that** the entire chain loop being constructed from the multi-directional chain link assembly comprising two links (10,11), a first guided link (10) and a second link (11), joined together (13, 16) to form a single multi-directional chain link assembly, the multi-directional chain link assembly comprises guide/drive wheels (12) for guiding the assembly at the central track (5), these guide/drive wheels (12) are only attached to the first link (10), being the guided link

2. A drive chain mechanism as described in claim 1 further **characterized in that** the first link (10) and the second link (11) of each multi-directional chain link assembly are joined together by means of a connecting pin (13) to form the single multi-directional chain link assembly.

3. A drive chain mechanism as described in claim 2, further **characterized in that** the multi-directional aspect of the multi-directional chain link assembly is achieved by having a ball joint connection (15,16) from the guided first link (10) of the multi-directional chain link assembly to the second link (11) of the next following chain link assembly (10,11).

4. A drive chain mechanism as described in claim 3, further **characterized in that** the multi-directional chain link assemblies are held together into the loop by the association of a connecting take-up plate (16) in one of the links (10 or 11) and a self adjusting ratchet mechanism (18) located within the other link (11 or 10).

5. A drive chain mechanism as described in claim 4, further **characterized in that** the connecting take-up plate (16) is provided at one end with the ball joint (15b) to connect the take-up plate (16) to the second link (11) and that the connecting take-up plate (16) is provided at its other end with a ratchet connection (17) acting with the self adjusting ratchet mechanism (18) located within the first link (10).

6. A drive chain mechanism as described in claim 3 and 4,
   further **characterized in that** the take-up, or length of the multi-directional chain link assembly is adjustable by loosening a lock nut (19) to disengage the self adjusting take up ratchet mechanism (18) for moving the connecting take-up plate (16) to the required position.

7. A drive chain mechanism as described in one of the previous claims further **characterized in** the following equation expressing the rational relationship between the elements in the design for the true tracking aspect of the chain link:

$$z = (m^2 - l^2)^{1/2}$$

   wherein

   " l " -　　is the distance between the guide wheels centres of the first guided link. The wheel centres are equidistant from the two joints in the first link,

   " m " -　　being the distance from the first joint to the second joint in the first link (length of the first link),

   " z " -　　being the distance from the first joint to the second joint in the second link (length of link 2).

8. A drive chain mechanism as described in claim 7, further **characterized in that** in the curved section of the overlapping slat conveyor for the practical reasons the radius (r) of the arc (9), on which the guide wheels (12) centres of the first guided link (10) and the mid point (F) between the first joint (B) and the second joint (C) of the second link (11) lie, should be not less then 0.8 metres and the sum of (m + z) should be between 0.2 and 0.3 metres.

## Patentansprüche

1. Antriebskettenmechanismus für überlappende Umlauf- oder Endlosschleifen-Plattenförderbänder mit mehreren Ebenen und mit sowohl horizontalen als auch geneigten Abschnitten, wobei sich die Kettenschleife am Mittelpunkt zwischen zwei Stützrollen (4), die auf zwei voneinander beabstandeten parallelen Schienen (7) laufen, befindet, wobei die Kettenschleife an einer Zentralschiene (5), die sich in der Mitte zwischen den parallelen Schienen (7) befindet, entlang geführt wird und wobei die Kettenschleife die hauptsächliche Verbindungs- und Antriebskomponente des Bandes (1) selbst ist, **dadurch gekennzeichnet, dass** die komplette Kettenschleife aus der multidirektionalen Kettengliedbaugruppe besteht, die zwei Glieder (10, 11) umfasst, und zwar ein erstes geführtes Glied (10) und ein zweites Glied (11), die zu einer einzelnen multidirektionalen Kettengliedbaugruppe zusammengefügt (13, 16) sind, wobei die multidirektionale Kettengliedbaugruppe Führungs- bzw. Antriebsräder (12) umfasst, um die Baugruppe an der Zentralschiene (5) entlang zu führen, wobei diese Führungs- bzw. Antriebsräder (12) nur an dem ersten Glied (10) angebracht sind, welches das geführte Glied ist.

2. Antriebskettenmechanismus nach Anspruch 1, des Weiteren **dadurch gekennzeichnet, dass** das erste Glied (10) und das zweite Glied (11) jeder multidirektionalen Kettengliedbaugruppe mittels eines Verbindungsstiftes (13) zu der einzelnen multidirektionalen Kettengliedbaugruppe zusammengefügt sind.

3. Antriebskettenmechanismus nach Anspruch 2, des Weiteren **dadurch gekennzeichnet, dass** der multidirektionale Aspekt der multidirektionalen Kettengliedbaugruppe durch eine Kugelgelenkverbindung (15, 16) von dem geführten ersten Glied (10) der multidirektionalen Kettengliedbaugruppe zu dem zweiten Glied (11) der nächstfolgenden Kettengliedbaugruppe (10, 11) erreicht wird.

4. Antriebskettenmechanismus nach Anspruch 3, des Weiteren **dadurch gekennzeichnet, dass** die multidirektionalen Kettengliedbaugruppen durch die Zusammenführung einer verbindenden Längeneinstellplatte (16) in einem der Glieder (10 oder 11) und eines selbstjustierenden Ratschenmechanismus' (18) in dem anderen Glied (11 oder 10) in der Schleife zusammengehalten werden.

5. Antriebskettenmechanismus nach Anspruch 4, des Weiteren **dadurch gekennzeichnet, dass** die verbindende Längeneinstellplatte (16) an einem Ende mit dem Kugelgelenk (15b) versehen ist, um die Längeneinstellplatte (16) mit dem zweiten Glied (11) zu verbinden, und dass die verbindende Längeneinstellplatte (16) an ihrem anderen Ende mit einer Ratschenverbindung (17) versehen ist, die mit dem selbstjustierenden Ratschenmechanismus (18) zusammenwirkt, der in dem ersten Glied (10) angeordnet ist.

6. Antriebskettenmechanismus nach Anspruch 3 und Anspruch 4, des Weiteren **dadurch gekennzeichnet, dass** die Länge der multidirektionalen Kettengliedbaugruppe in der Weise eingestellt werden kann, dass eine Sicherungsmutter (19) gelöst wird, um den selbstjustierenden Längeneinstell-Ratschenmechanismus (18) aus der Eingriffnahme zu nehmen, um die verbindende Längeneinstellplatte (16) in die gewünschte Position zu schieben.

7. Antriebskettenmechanismus nach einem der vorangehenden Ansprüche, des Weiteren **gekennzeichnet durch** die Gleichung

$$z = (m^2 - l^2)^{1/2}$$

welche die rationale Beziehung zwischen den Elementen in der Konstruktion für den Spurtreue-Aspekt des Kettengliedes ausdrückt, wobei
"I" = der Abstand zwischen den Führungsradmitten des ersten geführten Gliedes ist. Die Radmitten haben von den beiden Verbindungen in dem ersten Glied den gleichen Abstand;
"m" = der Abstand von der ersten Verbindung zu der zweiten Verbindung in dem ersten Glied (Länge des ersten Gliedes) ist;
"z" = der Abstand von der ersten Verbindung zu der zweiten Verbindung in dem zweiten Glied (Länge des zweiten Gliedes) ist.

8. Antriebskettenmechanismus nach Anspruch 7, des Weiteren **dadurch gekennzeichnet, dass** in dem Kurvenabschnitt des überlappenden Plattenförderbandes aus praktischen Gründen der Radius (r) des Bogens (9), auf dem die Mitten der Führungsräder (12) des ersten geführten Gliedes (10) und der Mittelpunkt (F) zwischen der ersten Verbindung (B) und der zweiten Verbindung (C) des zweiten Gliedes (11) liegen, nicht kleiner als 0,8 m sein sollte und die Summe von (m + z) zwischen 0,2 und 0,3 m betragen sollte.

## Revendications

1. Mécanisme à chaîne d'entraînement pour transporteurs à tablier à lattes chevauchantes multiniveaux à recirculation ou à boucle fermée ayant à la fois des parties horizontales et inclinées, la boucle de chaîne étant située au point médian entre deux rouleaux (4) de support passant sur deux rails (7) parallèles et espacés, la boucle de chaîne étant ainsi guidée sur une voie (5) centrale à mi distance entre les rails (7) parallèles et la boucle de chaîne constituant ainsi l'élément principal de liaison et d'entraînement du transporteur (1) lui-même, **caractérisé en ce que** l'ensemble de la boucle de chaîne est construite à partir de l'ensemble de maillons de chaîne multidirectionnels comprenant deux maillons (10, 11), un premier maillon (10) guidé et un deuxième maillon (11), assemblés ensemble (13, 16) pour former un unique ensemble de maillons de chaîne multidirectionnels, l'ensemble de maillons de chaîne multidirectionnels comprend des roues (12) de guidage / d'entraînement pour guider l'ensemble sur la voie (5) centrale, ces roues (12) de guidage / d'entraînement sont simplement fixées sur le premier maillon (10), qui est le maillon guidé.

2. Mécanisme à chaîne d'entraînement selon la revendication 1, **caractérisé en outre en ce que** le premier maillon (10) et le deuxième maillon (11) de l'ensemble de maillons de chaîne multidirectionnels sont assemblés ensemble au moyen d'une goupille (13) de raccordement pour former l'ensemble unique de maillons de chaîne multidirectionnels.

3. Mécanisme à chaîne d'entraînement selon la revendication 2, **caractérisé en outre en ce que** l'aspect multidirectionnel de l'ensemble de maillons de chaîne multidirectionnels est obtenu grâce au fait qu'un raccordement (15, 16) à joint à rotule se trouve entre le premier maillon (10) guidé de l'ensemble de maillons de chaîne multidirectionnels et le deuxième maillon (11) de l'ensemble (10, 11) suivant de maillons de chaîne.

4. Mécanisme à chaîne d'entraînement selon la revendication 3, **caractérisé en outre en ce que** les ensembles de maillons de chaîne multidirectionnels sont maintenus ensemble dans la boucle par l'association d'une plaque (16) d'enroulement de raccordement dans l'un des maillons (10 ou 11) et d'un mécanisme (18) automatique d'encliquetage positionné dans l'autre maillon (11 ou 10).

5. Mécanisme à chaîne d'entraînement selon la revendication 4, **caractérisé en outre en ce que** la plaque (16) d'enroulement de raccordement est munie à une extrémité du joint (15b) à rotule pour raccorder la plaque (16) d'enroulement au deuxième maillon (11) et **en ce que** la plaque (16) d'enroulement de raccordement est munie à son autre extrémité d'un raccord (17) à rochets agissant avec le mécanisme (18) automatique d'encliquetage situé dans le premier maillon (10).

6. Mécanisme à chaîne d'entraînement selon les revendications 3 et 4, **caractérisé en outre en ce que** l'enroulement, ou la longueur de l'ensemble de maillons de chaîne multidirectionnels, peut être réglé en desserrant un écrou (19) de blocage pour libérer le mécanisme (18) automatique d'encliquetage afin de déplacer la plaque (16) d'enroulement de raccordement dans la position requise.

7. Mécanisme à chaîne d'entraînement selon l'une des revendications précédentes, **caractérisé en outre en ce que** dans l'équation suivante exprimant la relation rationnelle entre les éléments de la conception de l'aspect de chemin vrai du maillon de chaîne :

$$z = (m^2 - l^2)^{1/2}$$

où

"l" - est la distance entre les centres des roues de guidage du premier maillon guidé. Les centres des roues sont équidistants par rapport aux deux joints dans le premier maillon ;

"m" - est la distance entre le premier joint et le deuxième joint dans le premier maillon (la longueur du premier maillon),

"z" - est la distance entre le premier joint et le deuxième joint dans le deuxième maillon (la longueur du maillon 2).

8. Mécanisme à chaîne d'entraînement selon la revendication 7, **caractérisé en outre en ce que** dans la section incurvée du transporteur à tablier à lattes chevauchantes, pour des raisons pratiques, le rayon (r) de l'arc (9), sur lequel se trouvent les centres des roues (12) de guidage du premier maillon (10) guidé et le point médian (F) entre le premier joint (B) et le deuxième joint (C) du deuxième maillon (11),

ne doit pas être inférieur à 0,8 mètre et la somme (m + z) doit être comprise entre 0,2 et 0,3 mètre.

Fig. 1

Fig. 2

Fig. 3

Fig. 4

Fig. 5

Fig. 6

Fig. 7

*Fig. 8*

Fig.9